# EUROPÄISCHE PATENTSCHRIFT

(11) **EP 0 493 666 B1**
(45) Veröffentlichungstag und Bekanntmachung des Hinweises auf die Patenterteilung: **08.03.1995**
(21) Anmeldenummer: 91119249.0
(22) Anmeldetag: 12.11.1991
(51) Int. Cl.: B26F 1/26, B23K 31/10, B23K 10/00, B23K 26/00, B23Q 35/46, B23Q 3/18

(54) **Bearbeitungsmaschine für Hohlprofile**
Machine for working hollow profile members
Machine d'usinage pour des profilés creux

(30) Priorität: 12.11.1990 DE 4035898
(43) Veröffentlichungstag der Anmeldung: 08.07.1992
(73) Patentinhaber: Eisenbach, Bernhard, D-65611 Brechen (DE)
(72) Erfinder: Eisenbach, Bernhard, D-65611 Brechen (DE)
(74) Vertreter: Katscher, Helmut, Dipl.-Ing.

(56) Entgegenhaltungen:
- EP-A- 0 040 925
- DE-A- 1 627 096
- DE-A- 2 045 244
- DE-A- 3 119 063
- DE-C- 3 317 026
- US-A- 3 036 358
- US-A- 3 880 354
- US-A- 4 795 882
- WERKSTATT UND BETRIEB, Band 121, Nr. 1, 1988, Seiten 57-60, München, DE; B.E.MEYER et al.: "Laser-Schneiden in drei Dimensionen"
- MACHINES & TOOLING, Band 46, Nr. 2,1975, Seite 59; N.G. TKACHIK: "Setting device for a copy-milling machine"

## Beschreibung

Die Erfindung betrifft eine Bearbeitungsmaschine für Hohlprofile zum Herstellen von Durchbrüchen in mehreren Profilwänden, mit einem Maschinengestell, an dem ein Werkstückaufspanntisch angeordnet ist, der Profilanschlagflächen und gegenüberliegende Spannelemente aufweist, und mit einem in drei Achsen bewegbaren Bearbeitungssupport, der einen Bearbeitungskopf trägt.

Derartige Bearbeitungsmaschinen dienen überwiegend zur Bearbeitung von Fenster- und Türrahmen aus Metallprofilen oder Kunststoffprofilen. Durchbrüche müssen vor allem im Bereich des einzusetzenden Schlosses hergestellt werden, nämlich beispielsweise bei Türrahmen eine Schloßkastenausnehmung in einer Profilwand und Drückerbohrungen sowie Profilzylinder-Ausnehmungen in den beiden benachbarten Profilwänden.

Hierzu weist eine bekannte Bearbeitungsmaschine der eingangs genannten Gattung (DE-A-20 45 244) zwei am Bearbeitungssupport gelagerte Bohr-Fräs-Spindeln auf, die nacheinander mit dem auf dem Werkstückaufspanntisch aufgespannten Hohlprofil in Eingriff gebracht werden und die Durchbrüche herstellen. Bei der bekannten Bearbeitungsmaschine sind die festen Profilanschlagflächen nur auf der einen Seite des aufzuspannenden Hohlprofils angeordnet; die Spannelemente sind nur auf der anderen Seite des Hohlprofils angeordnet und drücken dieses nur in einer Richtung gegen die festen Profilanschlagflächen.

Typische Anwendungsfälle sind die Drückerlöcher und die Profilzylinder-Ausnehmungen an Türprofilen in der äußeren und inneren Profilwand. Ein genaues Fluchten dieser Durchbrüche in den beiden Profilwänden wurde bisher dadurch angestrebt, daß diese Durchbrüche mit einem einzigen, verhältnismäßig langen Bohr- bzw. Fräswerkzeug in einer einzigen Aufspannung ausgeführt wurden. Eine spanende Bearbeitung von Stahlprofilen war in dieser Weise jedoch nicht möglich. Wegen der auftretenden hohen Schnittkräfte konnten bei Stahl nur verhältnismäßig kurze Fräser bzw. Bohrer verwendet werden, mit denen jeweils nur eine Profilwand bearbeitet werden konnte. Bei dem dadurch notwendigen Umspannen des Hohlprofils ergaben sich Fluchtungsfehler bzw. der Aufwand für das Ausrichten nach dem Umspannen war verhältnismäßig hoch.

Wenn an dem Hohlprofil Durchbrüche in gegenüberliegenden Profilwänden in zwei Aufspannungen bearbeitet werden sollen, muß das Hohlprofil dazwischen um 180° gedreht werden. Dadurch kommen in den beiden Aufspannungen unterschiedliche Profilwände zur Anlage an den festen Profilanschlagflächen. Wegen unvermeidlicher Maßtoleranzen der Hohlprofile führt dies dazu, daß die Durchbrüche in beiden Profilwänden nicht fluchtgenau bearbeitet werden können.

Aufgabe der Erfindung ist es daher, eine Bearbeitungsmaschine der eingangs genannten Gattung so auszugestalten, daß Durchbrüche in gegenüberliegenden Profilwänden in mehreren Aufspannungen fluchtgenau bearbeitet werden können.

Diese Aufgabe wird erfindungsgemäß dadurch gelöst, daß der Werkstückaufspanntisch an beiden Seiten des aufzuspannenden Hohlprofils jeweils eine feste Profilanschlagfläche und jeweils mindestens ein gegen die gegenüberliegende Profilanschlagfläche vorschiebbares Spannelement aufweist. Dies ermöglicht es, mit dem einzigen Bearbeitungskopf durch Umspannen des Hohlprofils Durchbrüche in gegenüberliegenden Profilwänden mit hoher Genauigkeit übereinstimmend auszuführen.

Vorteilhafte Ausgestaltungen des Erfindungsgedankens sind Gegenstand von abhängigen Ansprüchen.

Die Erfindung wird nachfolgend an einem Ausführungsbeispiel näher erläutert, das in der Zeichnung dargestellt ist. Es zeigt:
Fig. 1 eine Teildarstellung einer Bearbeitungsmaschine für Hohlprofile in einer Draufsicht auf den Werkstückaufspanntisch, wobei das Hohlprofil in einer ersten Aufspannung gezeigt ist,
Fig. 2 eine Ansicht in Richtung des Pfeiles II in Fig. 1,
Fig. 3 eine Draufsicht entsprechend der Fig. 1, wobei das Hohlprofil in einer zweiten Aufspannung dargestellt ist,
Fig. 4 eine Ansicht in Richtung des Pfeiles IV in Fig. 3 und
Fig. 5 eine Ansicht entsprechend den Fig. 2 und 4, wobei das Hohlprofil in einer dritten Aufspannung gezeigt ist.

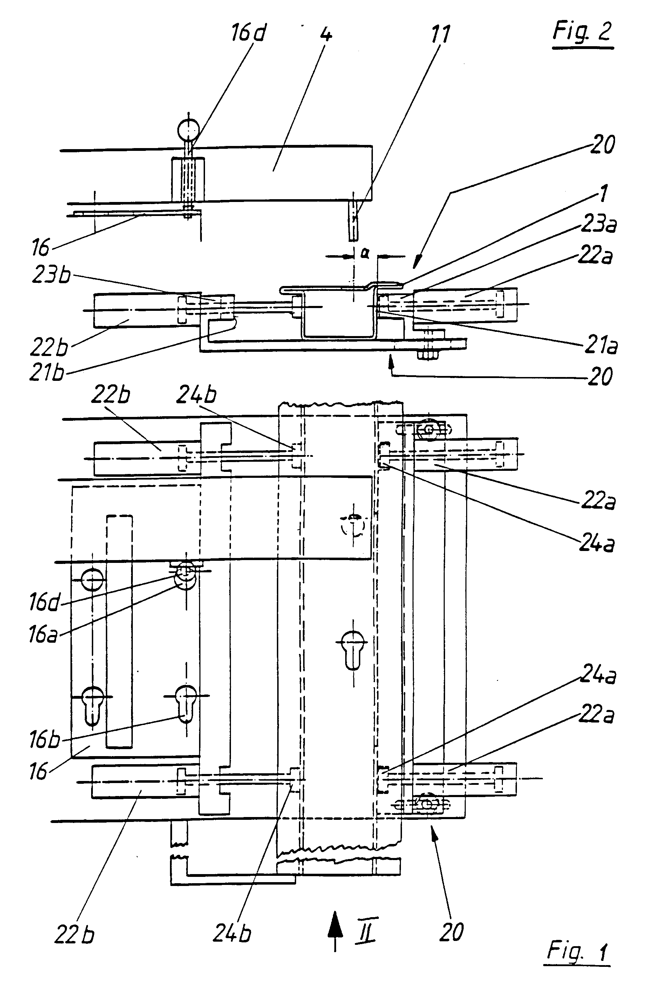

Die in Fig. 1 teilweise gezeigte Bearbeitungsmaschine dient dazu, in einem Hohlprofil 1 aus Metall oder Kunststoff, beispielsweise einem Schenkel eines Türrahmens, Durchbrüche in drei Profilwänden herzustellen.

Das zu bearbeitende Hohlprofil 1 ist in herkömmlicher Weise auf einen Werkstückaufspanntisch 20 aufgespannt, der an der Vorderseite eines Maschinengestells 3 befestigt ist.

An der Oberseite des Maschinengestells ist ein Bearbeitungssupport 4 beweglich gelagert. Der Bearbeitungssupport 4 kann mittels eines Handhebels in senkrechter Richtung verstellt werden.

Ein zweiter Handhebel ist an seinem unteren Ende am Maschinengestell allseitig schwenkbar gelagert und ist in seinem mittleren Bereich über ein Gelenk mit dem Bearbeitungssupport 4 verbunden. Der Bearbeitungssupport 4 ist in den beiden horizontalen Achsen über eine Kreuzschlittenanordnung am Maschinengestell verfahrbar gelagert. Der Bearbeitungssupport 4 ist somit über die beiden Handhebel in allen drei Vorschubachsen bewegbar.

In den beiden horizontalen Achsen werden die Vorschubwege des Bearbeitungssupports 4 durch eine Kopierschablone 16 in bekannter Weise begrenzt, in die ein mit dem Bearbeitungssupport 4 verbundener Kopiertaster 16d greift. In Fig. 1 erkennt man Kopierausnehmungen 16a für das Drückerloch und 16b für den Profilzylinder.

Der Werkstückaufspanntisch 20 wird eingesetzt, wenn nur ein einziger, oberer Bearbeitungskopf am Bearbeitungssupport 4 vorgesehen ist, der die (in den Fig. 2, 4 und 6 nur schematisch angedeutete) Bearbeitungseinrichtung 11 trägt. Bei dieser Bearbeitungseinrichtung 11 kann es sich um eine spanlose Bearbeitungseinrichtung handeln, beispielsweise eine Plasma-Schneiddüse, aber auch um einen Fräser. Kennzeichnend für die bei diesem Beispiel verwendeten Bearbeitungseinrichtungen 11 ist, daß mit dieser einzigen, oberen Bearbeitungseinrichtung 11 jeweils nur eine, nämlich die obenliegende Profilwand des Hohlprofils 1 bearbeitet werden kann, und zwar entweder, weil die spanlose Bearbeitungseinrichtung 11 nur diese obere Profilwand erreicht, oder weil ein die Bearbeitungseinrichtung 11 bildender Fräser wegen der auftretenden Zerspanungskräfte, die insbesondere bei Stahlprofilen hoch sind, nur so kurz ausgeführt werden kann, daß ebenfalls nur die obere Profilwand bearbeitet werden kann.

Um eine fluchtgenaue Bearbeitung der Durchbrechungen in gegenüberliegenden Profilwänden (der oberen und unteren Profilwand in Fig. 2) zu ermöglichen, muß das Hohlprofil 1 nacheinander in mehreren Aufspannungen bearbeitet werden.

Hierzu weist der Werkstückaufspanntisch 20 an beiden Seiten des aufzuspannenden Hohlprofils 1 jeweils eine feste Profilanschlagfläche 21a bzw. 21b auf, die in einem gegenseitigen Abstand angeordnet sind, der größer ist als die Breite des breitesten zu bearbeitenden Hohlprofils 1.

An beiden Seiten des aufzuspannenden Hohlprofils 1 ist außerdem jeweils mindestens ein gegen die gegenüberliegende Profilanschlagfläche 21a bzw. 21b vorschiebbares Spannelement angeordnet. Beim dargestellten Ausführungsbeispiel handelt es sich dabei um jeweils zwei druckmittelbetätigte Spannzylinder 22a bzw. 22b. Die Spannzylinder 22a und 22b sind jeweils an festen Anschlagleisten 23a bzw. 23b angebracht, die die Profilanschlagflächen 21a bzw. 21b bilden. Die Spannzylinder 22a bzw. 22b weisen jeweils Spannköpfe 24a bzw. 24b auf, die hinter die jeweils zugeordnete Profilanschlagfläche 21a bzw. 21b zurückziehbar sind.

In einer ersten Aufspannung, die in den Fig. 1 und 2 dargestellt ist, wird das Hohlprofil 1 durch die Spannzylinder 22b gegen die dem Maschinengestell abgewandte feste Profilanschlagfläche 21a gespannt. In dieser Aufspannung erfolgt die Bearbeitung der obenliegenden Profilwand, wobei die Steuerung des Bearbeitungssupports 4 in der schon beschriebenen Weise durch Kopieren erfolgt. Der Kopiertaster 16d greift in die Kopierschablone 16 und tastet die Kontur einer ersten Gruppe von Kopierausnehmungen 16a und 16b ab.

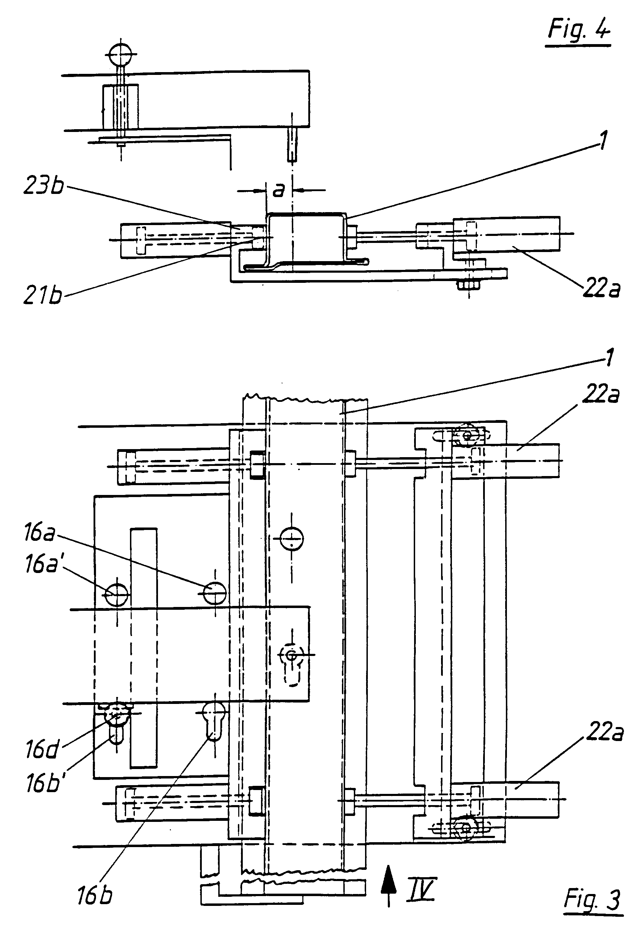

In einer zweiten Aufspannung, die in den Fig. 3 und 4 dargestellt ist, wird das um 180° gewendete Hohlprofil 1 von den Spannzylindern 22a gegen die feste Profilanschlagfläche 21b der auf der Seite des Maschinengestells angebrachten Anschlagleiste 23b gedrückt. Der Kopiertaster 16d greift dabei in die Kopierausnehmungen 16a' und 16b' einer zweiten Gruppe, die mit den Kopierausnehmungen 16a und 16b übereinstimmen, jedoch in seitlichem Abstand dazu angeordnet sind. Der Abstand zwischen diesen beiden Gruppen von Kopierausnehmungen ist so gewählt, daß der in den Fig. 2 und 4 mit "a" bezeichnete Abstand zwischen dem zu bearbeitenden Durchbruch und der jeweils benachbarten Profilanschlagfläche 21a bzw. 21b gleich ist. Das Hohlprofil 1 wird auf Umschlag bearbeitet, wobei eine hohe Fluchtungsgenauigkeit der dabei hergestellten Durchbrüche erzielt wird.

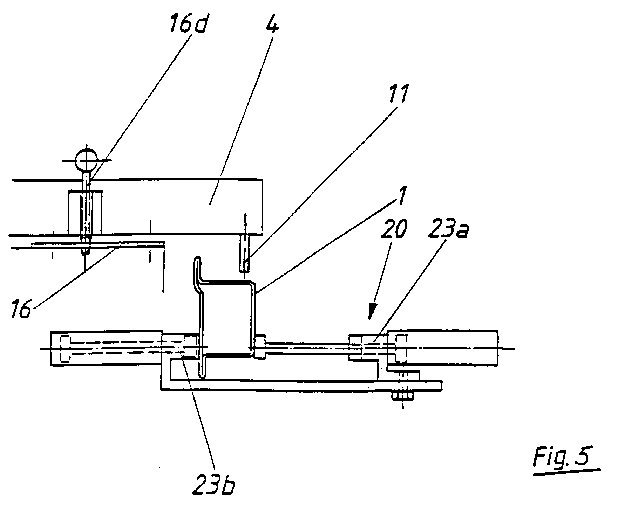

Fig. 5 zeigt eine dritte Aufspannung für das Hohlprofil 1, in der die Durchbrechung in einer dritten Profilwand, beispielsweise die Schloßkastenausnehmung, ebenfalls mit der einzigen, oberen Bearbeitungseinrichtung 1 (z.B. einer Plasma-Schneiddüse oder einem Fräser) bearbeitet wird.

## Patentansprüche

1. Bearbeitungsmaschine für Hohlprofile (1) zum Herstellen von Durchbrüchen in mehreren Profilwänden, mit einem Maschinengestell, an dem ein Werkstückaufspanntisch (20) angeordnet ist, der Profilanschlagflächen (21a, 22b) und gegenüberliegende Spannelemente (22a, 22b) aufweist, und mit einem in drei Achsen bewegbaren Bearbeitungssupport (4), der einen Bearbeitungskopf trägt, dadurch gekennzeichnet, daß der Werkstückaufspanntisch (20) an beiden Seiten des aufzuspannenden Hohlprofils (1) jeweils eine feste Profilanschlagfläche (21a, 21b) und jeweils mindestens ein gegen die gegenüberliegende Profilanschlagfläche (21a, 21b) vorschiebbares Spannelement (22a, 22b) aufweist.

2. Bearbeitungsmaschine nach Anspruch 1, dadurch gekennzeichnet, daß die beiden festen Profilanschlagflächen (21a, 21b) Anschlagleisten (23a, 23b) sind.

3. Bearbeitungsmaschine nach Anspruch 1, dadurch gekennzeichnet, daß die Spannelemente druckmittelbetätigte Spannzylinder (22a, 22b) sind.

4. Bearbeitungsmaschine nach Anspruch 2 und 3, dadurch gekennzeichnet, daß die Spannzylinder (22a, 22b) an den Anschlagleisten (23a, 23b) angebracht sind und hinter die Profilanschlagfläche (21a, 21b) zurückziehbare Spannköpfe (24a, 24b) aufweisen.

## Claims

1. Machine for working hollow profile members (1) for the production of openings in multiple profile walls, having a machine frame on which a work piece clamping table (20) is located, which has profile stop faces (21a, 22b) and clamping elements (22a, 22b) lying opposite, and with a machining support (4) which can be moved in three axes, which carries a machining head, characterized in that the work piece clamping table (20) has on both sides of the hollow profile member (1) to be clamped in each case a fixed profile stop face (21a, 21b) and in each case at least one clamping element (22a, 22b) which can be advanced against the opposite profile stop face (21a, 21b).

2. Machine according to Claim 1, characterized in that the two fixed profile stop faces (21a, 21b) are stop shoulders (23a, 23b).

3. Machine according to Claim 1, characterized in that the clamping elements are pressure-operated clamping cylinders (22a, 22b).

4. Machine according to Claims 2 and 3, characterized in that the clamping cylinders (22a, 22b) are fitted to the stop shoulders (23a, 23b) and have clamping heads (24a, 24b) which can be pulled back behind the profile stop face (21a, 21b).

## Revendications

1. Machine d'usinage pour profilés creux (1) pour la réalisation d'ouvertures dans plusieurs parois profilées, comportant un bâti de machine, sur lequel est agencée une table de fixation de pièces (20), qui comporte des surfaces d'appui du profilé (21a, 21b) et des éléments de blocage (22a, 22b) en regard, et un support d'usinage (4) mobile selon trois axes, qui porte une tête d'usinage, caractérisée en ce que la table de fixation de pièces (20) présente, sur les deux côtés du profilé creux (1) à bloquer, respectivement une surface fixe d'appui du profilé (21a, 21b) et respectivement au moins un élément de blocage (22a, 22b) qui peut être pressé vers la surface d'appui du profilé (21a, 21b) en regard.

2. Machine d'usinage selon la revendication 1, caractérisée en ce que les deux surfaces fixes d'appui du profilé (21a, 21b) sont des lattes d'appui (23a, 23b).

3. Machine d'usinage selon la revendication 1, caractérisée en ce que les éléments de blocage sont des cylindres de blocage pneumatiques (22a, 22b).

4. Machine d'usinage selon les revendications 2 et 3, caractérisée en ce que les cylindres de blocage (22a, 22b) sont appliqués sur les lattes d'appui (23a, 23b) et présentent des têtes de blocage (24a, 24b) qui peuvent être retirées derrière les surfaces d'appui du profilé (21a, 21b).
